# EUROPEAN PATENT APPLICATION

(11) **EP 3 731 108 A1**
(43) Date of publication of application: **28.10.2020**
(21) Application number: 18909311.5
(22) Date of filing: 16.03.2018
(51) Int. Cl.: G06F 16/00

(54) **SEARCH SYSTEM, SEARCH METHOD, AND PROGRAM**

(71) Applicant: Rakuten, Inc., Tokyo 158-0094 (JP)
(72) Inventor: DAULTANI, Vijay, Tokyo 158-0094 (JP)
(74) Representative: Viering, Jentschura & Partner mbB Patent- und Rechtsanwälte
(86) International application number: PCT/JP2018/010554
(87) International publication number: WO 2019/176102

(57) **Abstract**

Searching means (101) of a search system (1) searches a database, in which a plurality of data items are stored, using character information entered by a user as a query. Providing means (102) provides the user with a data item selected by the user from a search result obtained by the searching means (101). Training means (104) trains a learning machine to learn a relationship between item information of the data item selected by the user and the character information used as the query. Obtaining means (106) enters item information of a target data item into the learning machine and obtaining feature information of the target data item from the learning machine. Registering means (107) registers the feature information in the database in association with the target data item.

## Description

### Technical Field

The present invention relates to a search system, a search method, and a program.

### Background Art

There are known techniques for searching a database of a plurality of data items using character information entered by a user as a query. For example, Patent Literature 1 describes extracting a keyword group from content, which is an example of a data item, indexing the extracted keyword group, searching the content based on the keyword entered by the user as the query and the indexed keyword group, and providing each content with metadata corresponding to the keyword group.

### Citation List

### Patent Literature

Patent Literature 1: JP2003-228569A

### Summary of Invention

### Technical Problem

The techniques similar to the above described technique may include training a learning machine to learn relationship between a query used in a search and content selected from a search result, inputting the query entered by a user in the learning machine, obtaining content that is likely to be selected from the learning machine, and including the obtained content in the search result (assumed techniques) . However, in this case, the learning machine only learns the content that has been selected, and thus the content that has not been selected by the user (e.g., newly added content) cannot be included in the search result. As such, it is not possible to assist the user in searching content that is not selected by the user using the learning machine.

One or more embodiments of the present invention have been conceived in view of the above, and an object thereof is to provide a search system, a search method, and a program capable of assisting a user to search a data item using a learning machine and improving search accuracy even if the data item has not been selected by the user.

### Solution to Problem

In order to solve the above described problems, a search system according to the present invention includes searching means for searching a database, in which a plurality of data items are stored, using character information entered by a user as a query, providing means for providing the user with a data item selected by the user from a search result obtained by the searching means, training means for training a learning machine to learn a relationship between item information of the data item selected by the user and the character information used as the query, obtaining means for entering item information of a target data item into the learning machine and obtaining feature information of the target data item from the learning machine, and registering means for registering the feature information in the database in association with the target data item.

A search method according to the present invention includes the steps of searching a database, in which a plurality of data items are stored, using character information entered by a user as a query, providing the user with a data item selected by the user from a search result obtained in the searching step, training a learning machine to learn a relationship between item information of the data item selected by the user and the character information used as the query, entering item information of a target data item into the learning machine and obtaining feature information of the target data item from the learning machine, and registering the feature information in the database in association with the target data item.

A program according to the present invention causes a computer to function as searching means for searching a database, in which a plurality of data items are stored, using character information entered by a user as a query, providing means for providing the user with a data item selected by the user from a search result obtained by the searching means, training means for training a learning machine to learn a relationship between item information of the data item selected by the user and the character information used as the query, obtaining means for entering item information of a target data item into the learning machine and obtaining feature information of the target data item from the learning machine, and registering means for registering the feature information in the database in association with the target data item.

An information storage medium according to the present invention is a computer-readable information storage medium that stores the program.

In one aspect of the present invention, the obtaining means obtains the character information as the feature information, and the registering means registers the character information, which is obtained from the learning machine, in the database as an index of the target data item.

In one aspect of the present invention, the item information is character information defined as a first index, the training means trains the learning machine to learn a relationship between the first index of the data item selected by the user and the character information used as the query, the obtaining means enters the first index of the data item of the target data item into the learning machine, and obtains the character information as the feature information from the learning machine, and the registering means registers the character information obtained from the learning machine in the database as a second index of the data item of the target data item.

In one aspect of the present invention, the search system further includes recording means for recording a combination of the item information of the data item selected by the user and the character information used as the query. The training means trains the learning machine to learn the relationship at predetermined timing based on the combination recorded by the recording means.

In one aspect of the present invention, the training means trains the learning machine to learn the relationship whenever the user selects a data item.

In one aspect of the present invention, the training means generates the learning machine based on a recurrent neural network model, a long short-term memory model, or a sequence conversion model.

In one aspect of the present invention, the search system further includes adding means for adding a new data item to the database. The obtaining means enters item information of the new data item into the learning machine, and obtains feature information of the new data item from the learning machine. The registering means registers the feature information in the database in association with the new data item.

In one aspect of the present invention, the database registers, for each data item, a first index and a second index that is registered by the registering means, and the searching means provides the user with a first search result based on the first index, and provides the user with a second search result based on the second index.

In one aspect of the present invention, the data item relates to a product or service. The searching means provides the user with the first search result for displaying a page of the product or the service based on the first index, and provides the user with the second search result for providing a coupon of the product or the service based on the second index.

### Summary of Invention

According to the present invention, even if a data item has not been selected by a user, it is possible to assist the user to search the data item using a learning machine and improve search accuracy.

### Brief Description of the Drawings

FIG. 1 is a diagram illustrating an overall configuration of a search system;
FIG. 2 is a diagram illustrating a physical arrangement of a server;
FIG. 3 is a diagram illustrating an example of a top page of an online shopping mall;
FIG. 4 is a diagram illustrating an example of a search result;
FIG. 5 is a diagram illustrating an example of a product page;
FIG. 6 is a functional block diagram showing an example of functions implemented in the search system;
FIG. 7 is a diagram illustrating an example of a product database;
FIG. 8 is a diagram illustrating an example of training data;
FIG. 9 is a diagram illustrating an example of a product registration page;
FIG. 10 is a diagram showing how feature information is obtained from the learning machine;
FIG. 11 is a flow chart showing an example of training data generating processing;
FIG. 12 is a flow chart showing an example of training data generating processing; and
FIG. 13 is a flow chart showing an example of index registration processing.

### Description of Embodiments

### [Overall configuration of search system]

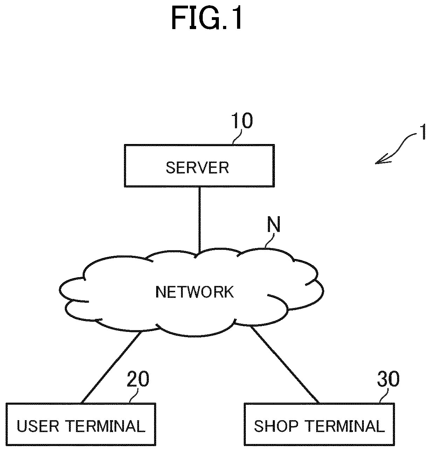

An embodiment of the search system according to the present invention will be described below. FIG. 1 is a diagram illustrating an overall configuration of the search system. As shown in FIG. 1, the search system 1 includes a server 10, a user terminal 20, and a shop terminal 30, which are connected to one another via a network N. FIG. 1 shows one server 10, one user terminal 20, and one shop terminal 30, although the number of each of them may be two or more.

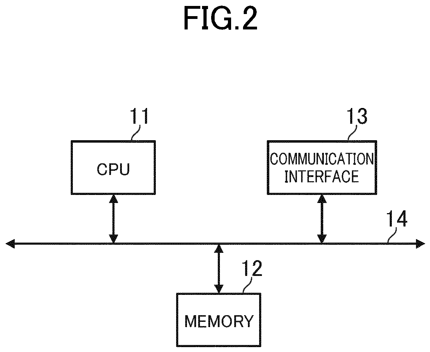

FIG. 1 is a diagram illustrating a physical arrangement of the server 10. As shown in FIG. 2, the server 10 is a server computer and includes, for example, a CPU 11, a memory 12, and a communication interface 13, which are connected to one another via a bus 14. The CPU 11 executes processing in accordance with programs and data stored in the memory 12. FIG. 2 shows one CPU 11, although the server 10 may include at least one processor, and may include two or more CPUs 11. The memory 12 includes a main storage unit and an auxiliary storage unit. For example, the main storage unit is a volatile memory such as a RAM, and the auxiliary storage unit is a nonvolatile memory such as a hard disk and a flash memory. The communication interface 13 is a wired or wireless communication interface for data communications through a network, for example.

The user terminal 20 is a computer operated by a user, such as a personal computer, a portable information terminal (including a tablet computer), and a mobile phone (including a smartphone) .

The shop terminal 30 is a computer operated by a person in charge in the shop, such as a personal computer, a portable information terminal (including a tablet computer), and a mobile phone (including a smartphone).

The programs and data described as being stored in the memory 12 may be provided to the server 10 through a network. The hardware configuration of the server 10 is not limited to the above example, and various types of hardware can be applied. For example, the server 10 may include a reader (e.g., optical disc drive and memory card slot) for reading a computer-readable information storage medium, and an input/output interface (e.g., USB port) for directly connecting to external devices. The programs and data stored in the information storage medium may be provided to the server 10 through the reader or the input/output interface.

### [2. Overview of search system]

The search system 1 searches a database, in which a plurality of data items are stored, using character information entered by a user in the user terminal 20 as a query.

The character information entered in the user terminal 20 includes at least one character. The character information is used as a query, and thus also referred to as a keyword or a search character string. For example, the character information may include only one word (search word) , or a plurality of words. In a case where the character information includes a plurality of words, the words may be spaced. In this case, the words are used under the AND condition or under the OR condition. Further, the character information is not limited to a word, but may be a sentence or a part of a sentence.

The data item is a unit of data to be searched, and, for example, each record of a database. The data item is any type of data, and includes, for example, content such as a web page, an electronic book, video, music, and an application, or a file such as a document file, a text file, an image file, and an audio file.

In this embodiment, a case will be described in which the search system 1 is applied to an online shopping mall, and a product page of products treated by a shop is described as an example of the data item. As such, in the embodiment, the description of "product page" can be replaced with "data item." For example, the search system 1 searches the database, in which various product pages are stored, using the character information entered by the user in the user terminal 20 as a query.

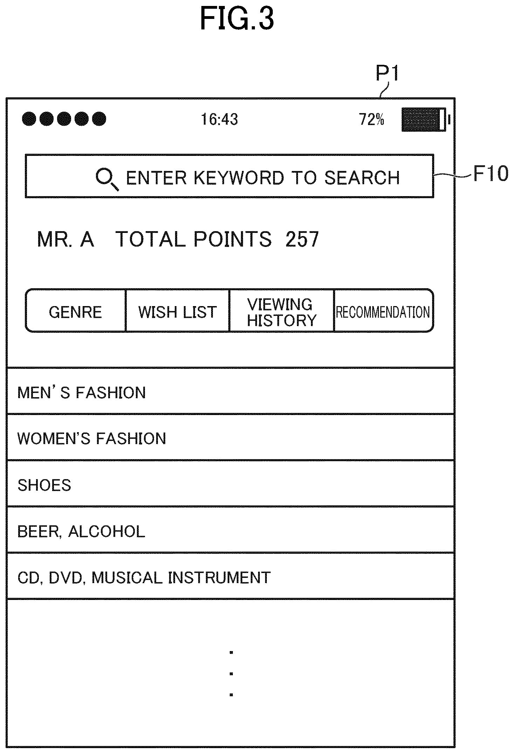

FIG. 3 is a diagram illustrating an example of a top page of the online shopping mall. As shown in FIG. 3, for example, when the user terminal 20 accesses the server 10, a top page P1 of the online shopping mall is displayed on the user terminal 20. In the top page P1, queries such as character information, a genre (category), and attributes of a product (e.g., color, size) can be specified.

For example, the user enters character information in an input form F10 on the top page P1, and searches for a desired product page. For example, when the user enters the character information "wristwatch ABC-Watch" for searching, a search result page indicating the search results is displayed on the user terminal 20.

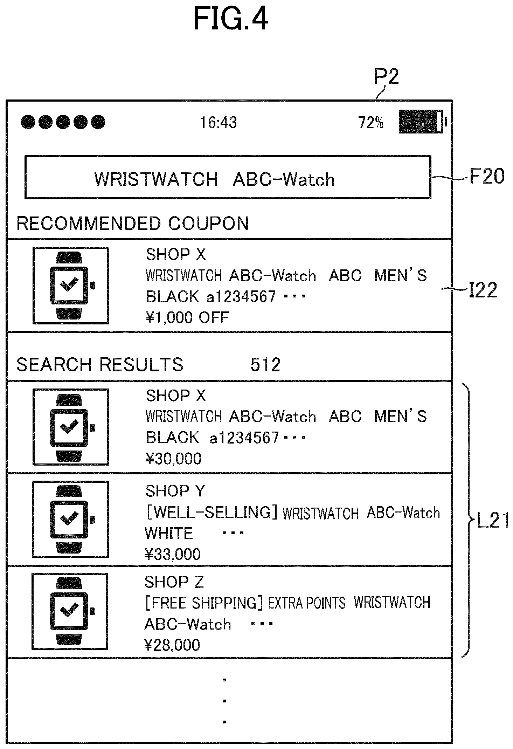

FIG. 4 is a diagram illustrating an example of a search result. As shown in FIG. 4, an input form F20 on the search result page P2 displays the character information used as the query. In this embodiment, two types of searches are executed based on the character information: search in order to display the list L21 on the product page; and search in order to display coupon information 122 of the products.

For example, the list L21 displays links to product pages that are hit in the search in a predetermined order. The linked information includes identification information of the product pages (e.g., URL), and the list L21 displays information such as product images, shop names, product titles, and prices.

The product title is a name of a product given by a shop in an Internet shopping mall. The product title may be a product name or a model number given by a product manufacturer, although in this embodiment, a shop can freely input a product title. As such, a product may have different product titles depending on shops dealing with the product.

The product title includes at least one word. For example, the product title may include some words delimited with spaces, or may be written in a sentence format. For example, the product title may be a combination of words, sentences, and symbols such as parentheses. For example, the product title may include information about the product, such as a product name, a model number, a genre (category), and attributes (e.g., color, size, place of production, material), or information about services of shops, such as "free shipping" and "extra points."

The coupon information 122 indicates information about a coupon that is hit in the search, and displays, for example, a product image, a shop name, a product title, and content of the coupon. The coupon may be information for providing a predetermined bonus, such as information for purchasing a product at a discount price, and information for getting a free gift. When a user selects the coupon information 122, the user can acquire a coupon. When the user selects one of linked information in the list L21, a linked product page is displayed.

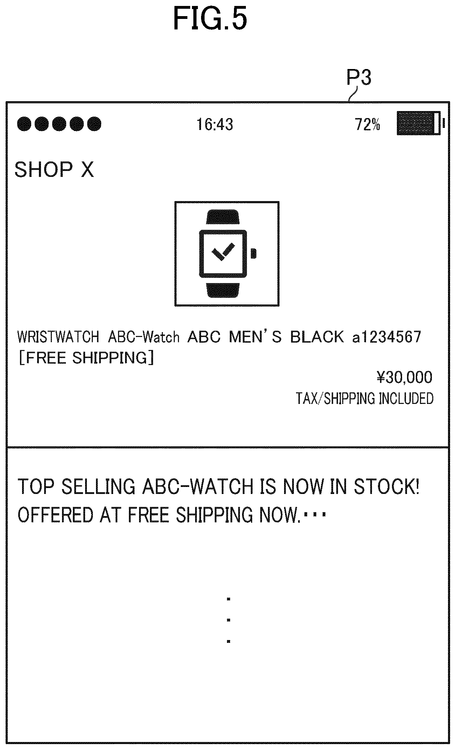

FIG. 5 is a diagram illustrating an example of the product page. As shown in FIG. 5, a product page P3 is a page for purchasing a product, and displays, for example, a shop name, a product image, a product title, a price, and a description on the product. For example, a user can purchase the product by placing the product in a shopping cart in the product page P3. Further, for example, the user can go back to the search result page P2 to select another linked information, or conduct a search again using a different search condition.

The search system 1 according to this embodiment trains the learning machine to learn each user' s action to improve accuracy of the list L21 and the coupon information 122, which are examples of the search result. In this regard, in the assumed techniques described above, the learning machine is input with character information used as a query at the search, and outputs a product page selected from the search result. This generates an inherent problem that the learning machine cannot assist a user to search a data item that the user has not selected. In this embodiment, the input/output relationship is reversed so as to address the problem in the assumed techniques. In addition, the learning machine is not required when a user executes a search, and this enables high-speed search and extremely small information processing load, and provides advantages of a low performance cost and low power consumption when creating a learning machine.

For example, a user does not necessarily enter, as a query, a word included in a product title in a product page that the user desires. As such, the query entered by the user can be an inaccurate query. In order to accurately search a desired product page even if the user enters an inaccurate query, the learning machine in this embodiment accurately predicts and outputs the inaccurate query based on the queries actually used. For example, the search system 1 uses not only a product title in a product page but also an output result of the learning machine as an index, thereby providing information (e.g., coupon information 122) desired by users. In the following, the search system 1 will be described in details.

### [Functions implemented in search system]

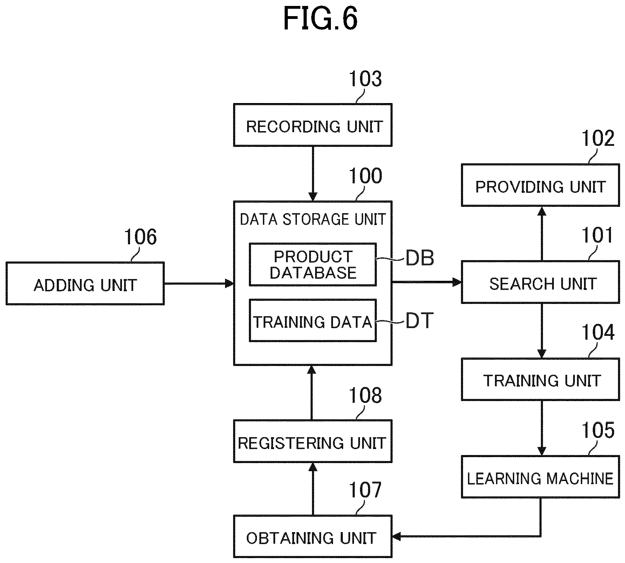

FIG. 6 is a functional block diagram showing an example of functions implemented in the search system 1. As shown in FIG. 6, the search system 1 implements a data storage unit 100, a search unit 101, a providing unit 102, a recording unit 103, a training unit 104, a learning machine 105, an adding unit 106, an obtaining unit 107, and a registering unit 108. In this embodiment, a case will be described in which these functions are implemented by the server 10.

### [3-1. Data storage unit]

The data storage unit 100 is implemented mainly by the memory 12. The data storage unit 100 stores data necessary for searching product pages. Here, a product database DB and training data DT will be described as an example of data to be stored in the data storage unit 100.

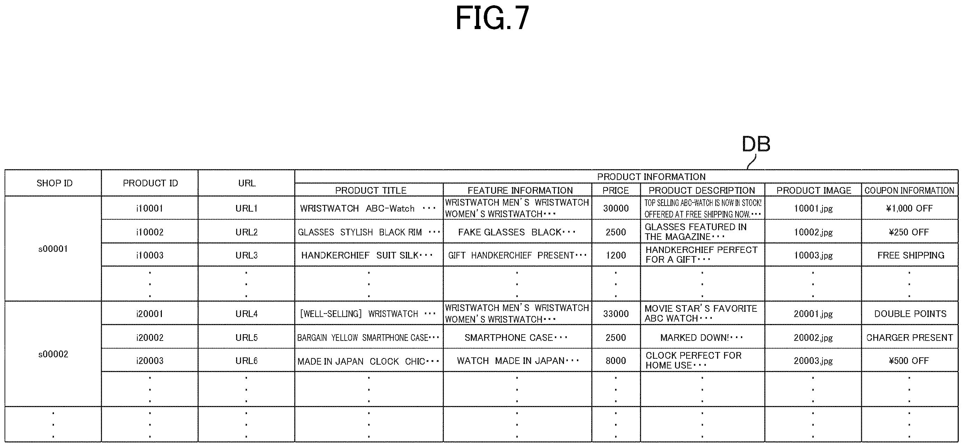

FIG. 7 is a diagram illustrating an example of the product database DB. As shown in FIG. 7, the product database DB stores various information about product pages to be searched. The product database DB is an example of the database according to the present invention. Any database according to a type of a data item may be used. For example, if a data item is an electronic book, a database for electronic books may be prepared, and if a data item is video, a database for video may be prepared.

For example, the product database DB stores a shop ID for uniquely identifying a shop, a product ID for uniquely identifying a product, a URL of a product page, and product information. The product information relates to content of a product, such as information to be displayed on a product page, or information to be used as an index when searching product pages. For example, the product information includes a product title, feature information, a price, a product description, a product image, and coupon information.

In the example of data storage shown in FIG. 7, the product title has a format in which words are delimited with spaces. For example, the product title is used as an index. The feature information is registered by the registering unit 108, and will be described in detail. In this embodiment, the feature information is also used as an index. As such, a first index (product title) and a second index (feature information), which is recorded by the registering unit 108, are recorded in the product database DB for each product page.

The product description is a description on a product, and includes more amount of information (the number of characters) than the product title, for example. The product title and the product description may have predetermined written forms. For example, the product title may include series of words, and the product description may be written in sentences. The product description is not limited to a text, but may include information such as tables, video, and sound. The product description may be used as an index. The product image may be a captured image of a product, or a processed image of a captured image. The information included in the product information may not be limited to the above examples, but may include, for example, a management number of a product, a catchy slogan, a shipping charge, a genre, and attributes.

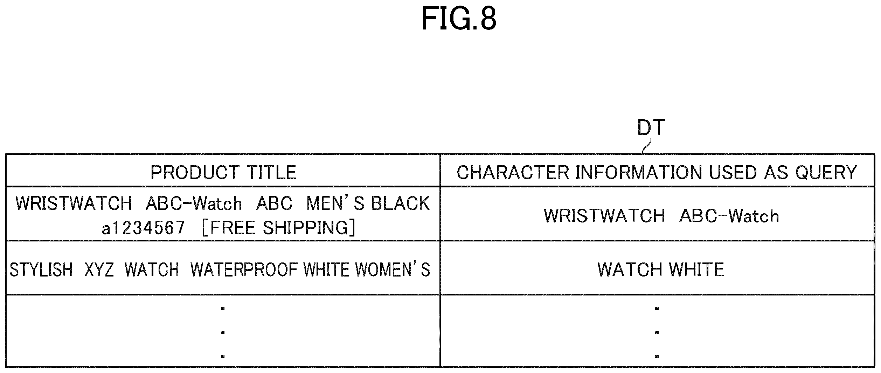

FIG. 8 is a diagram illustrating an example of the training data DT. As shown in FIG. 8, the training data DT is data for training the learning machine 105 to output an appropriate answer in response to the entered information. In this embodiment, the learning machine 105 is input with a product title, and outputs feature information, and thus the training data DT shows such relationship between the input and the output.

As described above, the learning machine 105 predicts and outputs an inaccurate query being entered by a user. The feature information output from the learning machine 105 is the second index, and also described as a predicted query or an expected query used in the search for the query. For example, the recording unit 103 described later records a combination of a product title and character information, which is a query actually used, in the training data DT, and the training unit 104 described later trains the learning machine 105 using the training data DT. The training data DT may be asymmetric data in which questions and answers are not one for one.

The data stored in the data storage unit 100 is not limited to the above example. The data storage unit 100 may store data necessary for searching, and may store, for example, a shop database in which shop IDs and shop names are stored. For example, the data storage unit 100 may store a user database in which basic information of users and acquired coupons are stored. For example, the data storage unit 100 may store a dictionary database in which words used in queries and indexes are stored. The dictionary database stores index numbers and words in association with each other.

### [3-2. Search unit]

The search unit 101 is implemented mainly by the CPU 11. The search unit 101 searches the product database DB, in which product pages are stored, using character information entered by a user as a query.

A query is a condition for retrieving information from a database. A query may be referred to as a search condition. In this embodiment, character information will be described as an example of a query, although a query may not be limited to the character information, but information such as a genre or an attribute may be a query, or a combination of these may be a query.

For example, the search unit 101 searches the product database DB based on the character information entered by the user as a query and the indexes stored in the product database DB. Various known methods can be applied to the search method using queries and indexes. For example, an index that is an exact match or a partial match with a query may be searched, or an ambiguous search may be performed. The ambiguous search may use various known algorithms, such as the Bitap algorithm.

For example, the search unit 101 inputs the character information, which is entered by the user as a query, and indexes of a product page into a predetermined expression, and calculates a score of the product page. The score is a value indicating search probability and coincidence between a query and an index. The expression of the score may be freely determined, and, for example, use a distance between a feature vector of the query and a feature vector of the index. The feature vector is a feature amount as a character, and obtained by using, for example, Word2vec. The search unit 101 may calculate a higher score when the distance is shorter, and calculate a smaller score when the distance is longer.

For example, the search unit 101 obtains a search result based on a score of each product page. The search unit 101 may present a predetermined number of product pages in a hit list in descending order of the scores, or present all of the product pages having the score equal to or more than a threshold value in the hit list.

The product page in this embodiment includes a product title, which is a first index, and feature information, which is a second index, and thus the search unit 101 performs search based on the first index and the second index. That is, the search unit 101 obtains a search result using both of the first index and the second index. For example, the search unit 101 may provide a user with a first search result based on the first index, and a second search result based on the second index.

For example, the search unit 101 searches product pages based on the product title, which is the first index, and provides the user with a list L21, which is a first search result. That is, the search unit 101 provides the user with the first search result for displaying the product pages based on the first index.

For example, the search unit 101 searches product coupons based on the feature information, which is the second index, and provides the user with the coupon information 122, which is the second search result. That is, the search unit 101 provides the user with the second search result for giving coupons of products or service based on the second index.

The search unit 101 may perform search for displaying the list L21 based on both of the first index and the second index. Similarly, the search unit 101 may perform search for displaying the coupon information 122 based on both of the first index and the second index. That is, the search unit 101 may perform a single search based on both of the first index and the second index instead of performing different searches between the first index and the second index.

### [3-3. Providing unit]

The providing unit 102 is implemented mainly by the CPU 11. The providing unit 102 provides a user with a product page selected by the user from the search result obtained by the search unit 101. Here, "providing" means, for example, displaying an image on the user terminal 20, outputting sound from the user terminal 20, or sending data to the user terminal 20.

In this embodiment, a product page is described as an example of a data item, and thus the providing unit 102 provides the product page to the user by sending data for displaying the product page to the user terminal 20. Such data may be HTML data of the product page, or an image or a text to be inserted into a frame of the product page. For example, if the product page includes video or sound, the data may be video or sound in the product page.

For example, the providing unit 102 receives identification information (e.g., URL) of a product page selected by a user from the user terminal 20, and specifies the product page selected by the user. The providing unit 102 refers to the product database DB, and sends data for displaying the specified product page to the user terminal 20.

### [3-4. Recording unit]

The recording unit 103 is implemented mainly by the CPU 11. The recording unit 103 records a combination of the product information of the product page selected by the user and the character information used as a query. The combination may be stored in the data storage unit 100, or in a computer (external storage) other than the server 10. The product information recorded in the recording unit 103 is an example of the item information according to the present invention.

The item information indicates content or features of data items. In this embodiment, the product page is an example of a data item, and thus product information will be described as an example of the item information, although the item information may be information corresponding to types of data items. For example, if the data item is an electronic book, the item information may include a title, an author, a genre, and a summary of the book. For example, if the data item is a video, the item information may include a title, a creator, a genre, and an outline of the video. The item information may be used as an index, or may not particularly be used as an index.

In this embodiment, as information included in the product information, a product title will be taken as an example of the item information. As such, in the embodiment, the description of "product title" may be replaced with "item information."

For example, the recording unit 103 records a combination of a product title of a product page selected by a user and character information used as a query in the training data DT. The recording unit 103 may record the combinations in any data, and may record the combinations in data other than the training data DT. In this case, the training data DT is generated based on such data.

To record a combination means to store a plurality of information items in association with one another, and to store a plurality of information items in the same record. The recording unit 103 may record information other than product titles as item information. For example, the recording unit 103 may record information about product descriptions and catchy slogans as the item information. The information to be recorded by the recording unit 103 may be determined based on a combination of information entered into the learning machine 105 and information output from the learning machine 105.

### [3-5. Training unit and Learning machine]

The Training unit 104 is implemented mainly by the control unit 11. The training unit 104 trains the learning machine 105 to learn relationship between a product title of a product page selected by a user and character information used as a query. In this embodiment, the training data DT as shown in FIG. 8 is prepared, and thus the training unit 104 trains the learning machine 105 based on the training data DT.

The learning machine 105 in this embodiment outputs feature information of undefined length in response to an input of a product title of undefined length. As such, the learning machine 105 uses recurrent neural networks as a machine learning algorithm. Among recurrent neural networks, this embodiment employs a sequence conversion model using a long short-term memory cell. As such, the training unit 104 generates a learning machine 105 based on a recurrent neural network model, a long short-term memory model, or a sequence conversion model. The machine learning algorithm may be any model capable of implementing similar functions, such as GRU (Gated Recurrent Unit) model.

In this embodiment, a product title is an example of item information and is character information determined as a first index used for searching product pages. As such, the training unit 104 trains the learning machine 105 to learn relationship between a first index of a product page selected by a user and character information used as a query. The learning method of the learning machine 105 may use various known methods, such as the BPTT (Back-Propagation Through Time) method and the RTRL (Real-Time Recurrent Learning) method.

When to train the learning machine 105 may be freely determined. The training unit 104 trains the learning machine 105 at predetermined timing to learn the relationship mentioned above based on the combinations recorded by the recording unit 103. The predetermined timing may be the timing of sending a predetermined request from an administrator of the search system 1 to the server 10, or an arrival of the time and date determined in a batch file, for example. The training unit 104 may determine whether the predetermined timing has arrived by determining whether the predetermined request from the administrator has been received or the predetermined time and date has arrived.

### [3-6. Adding unit]

The adding unit 106 is implemented mainly by the control unit 11. The adding unit 106 adds a new product page to the product database DB. In this embodiment, when a predetermined registration operation is performed on a shop terminal 30, the adding unit 106 adds a new product page to the product database DB. For example, registration is performed on a product registration page displayed on the shop terminal 30.

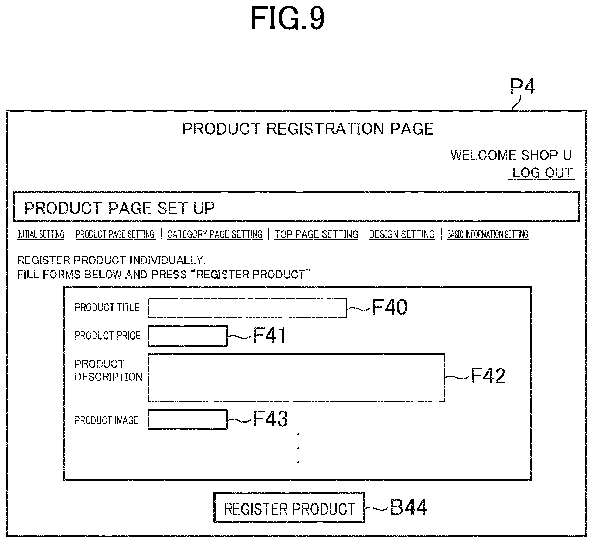

FIG. 9 is a diagram illustrating an example of the product registration page. As shown in FIG. 9, a product registration page P4 displays an input form F40 for inputting a product title, an input form F41 for inputting a price, an input form F42 for inputting a description of a product, and an input form F43 for inputting a product image.

The information to be entered in the product registration page P4 is not limited to the above examples, but may include a URL of a product page, coupon information, a management number of a product, a catchy slogan, a shipping charge, a genre, and an attribute.

For example, when a person in charge in the shop operates the shop terminal 30 to input a variety of information about the product page and selects a button B44, such information is sent from the shop terminal 30 to the server 10. The adding unit 106 stores the received information in the product database DB, thereby adding a new product page.

### [3-7. Obtaining unit]

The obtaining unit 107 is implemented mainly by the CPU 11. The obtaining unit 107 inputs item information (product title in this embodiment) of a target product page in the learning machine 105, and obtains feature information of the target product page from the learning machine 105.

The target product page is a product page for which feature information is to be obtained, and a product page for which item information is entered into the learning machine 105. The target product page may be automatically determined, or determined based on an operation of the administrator. For example, a target product page may be a product page which is registered in the product database DB and for which feature information has not been registered yet, although in this embodiment, a target product page corresponds to a new product page to be added by the adding unit 106.

The feature information indicates features of data items. For example, the feature information may be used as an index, or may not particularly be used as an index. For example, the feature information may be character information output from the learning machine 105, or information obtained by internal calculation of the learning machine 105.

In this embodiment, a case will be described in which the obtaining unit 107 obtains, as feature information, character information output from the learning machine 105. The character information output from the learning machine 105 may be a word (one or more characters), or information about a word. The information about a word is information that can specify the word, and associated with the word one-to-one. For example, the information about a word may be an index number assigned to the word, or a feature amount indicating a feature of the word. The index number is a number uniquely identifying a word in a dictionary database storing a variety of words. The feature amount is a value indicating a feature of a word, such as vector information in Word2vec. The character information output from the learning machine 105 is information expected from a query that is actually used, and thus the character information may also be described as a predicted query list or an expected query list output from the learning machine 105.

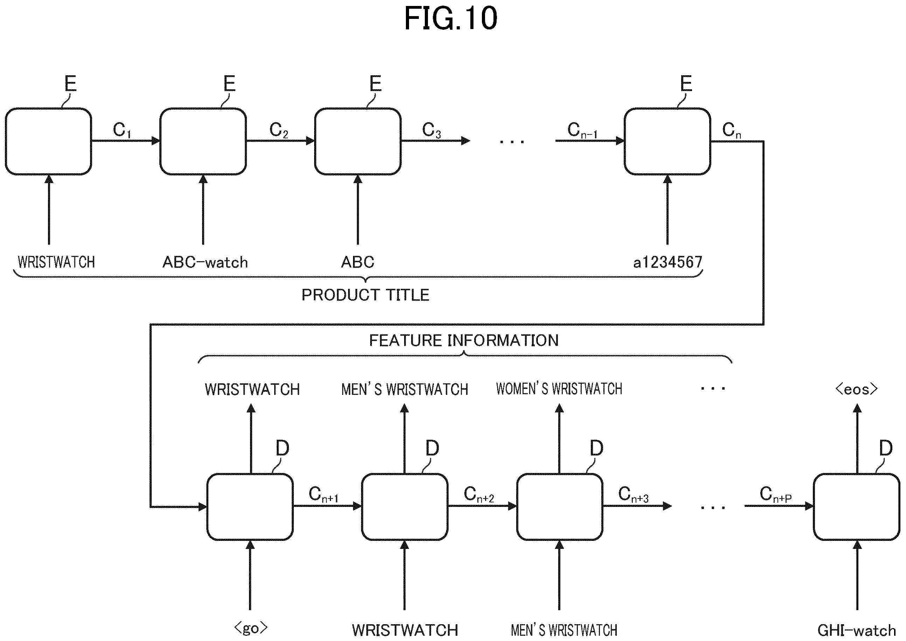

FIG. 10 is a diagram showing how feature information is obtained from the learning machine 105. As shown in FIG. 10, the recurrent neural network is taken as an example. The learning machine 105 in this embodiment is a sequence conversion model using recurrent neural networks by a long short-term memory cell, which has encoders E and decoders D.

The configuration of the long short-term memory cell is known in the art, and thus detailed description thereof is omitted. In FIG. 10, the long short-term memory cell is a single block, although the long short-term memory cell may be formed of multiple layers. When the long short-term memory cell has more number of layers, output accuracy is more improved but computational amount increases. As such, the number of layers may be the number enough to obtain a sufficient accuracy, for example, about two to eight.

In FIG. 10, the learning machine 105 is created as a uni-directional network, although the learning machine 105 may be created as a bi-directional network. The learning machine 105 may be created using a known computer programming library, such as "TensorFlow" of Google, and "Chainer" of Preferred Networks.

In FIG. 10, the horizontal direction indicates time steps, which proceed from left to right. In this embodiment, a product title includes a plurality of words, and thus the obtaining unit 107 divides a product title into individual words, and enters one word in each of the encoders E. The product title may be divided into individual words at positions of spaces.

For example, when a product title "wristwatch ABC-Watch ABC men's black a1234567" is entered in the learning machine 105, the obtaining unit 107 divides the product title into six words of "wristwatch", "ABC-Watch", "ABC", "men's", "black", and "a1234567", and inputs these six words in order. For example, the obtaining unit 107 inputs a feature amount (e.g., feature vector described above) of each word in the encoders E.

For example, the learning machine 105 calculates and sequentially records internal vectors ct based on the words entered in the encoders E. The internal vector cₜ indicates internal states of the encoders E for hidden layers. The degree of the internal vector cₜ may be freely determined, such as 100 to 1000 degrees, although it depends on the number of layers of the long short-term memory cell. Whenever a word is entered, the learning machine 105 provides an internal vector ct to a next step, and when all the words included in the product title is entered, an internal vector cₙ can be obtained.

The learning machine 105 provides the internal vector cn to a decoder D, and enters an input <go>, which is a special reserved word, in the decoder D. The reserved word instructs the decoder D to start an output, and is assigned with a fixed value. When an input <go> is entered, the decoder D outputs a word, and the internal vector is changed to cₙ₊₁. The output word is used so as to be entered in a decoder D in the next step, and the internal vector cₙ₊₁ is used as the internal state of the decoder D in the next step.

In the example of FIG. 10, the decoder D in which the input <go> is entered outputs a word "wristwatch", and the internal vector is changed to cₙ₊₁. The output word "wristwatch" is used so as to be entered in a decoder D in the next step. The decoder D in the next step outputs a word "men's wristwatch", and the internal vector is changed to cₙ₊₂. In this manner, the learning machine 105 sequentially provides output words and internal vectors cₜ to next steps until a decoder D outputs output <eos>, which is a special reserved word. This reserved word indicates the end of outputs by the decoders D, and is assigned with a fixed value.

At least one word obtained as described above is the final output result of the learning machine 105. The obtaining unit 107 obtains, as feature information, the at least one word that is output from the learning machine 105. For example, the obtaining unit 107 may connect a plurality of output words from the decoders D with spaces therebetween to obtain as feature information, or list a plurality of words to obtain as feature information.

The operations of the learning machine 105 are as described above. When the training unit 104 trains the learning machine 105 to perform machine learning, the training data DT is used to change internal parameters of the encoders E and the decoders D. For example, the training unit 104 is input with a product title, and outputs character information used as a query, and adds the reserved word <go> before the output and the reserved word <eos> after the output so as to change the internal parameters of the encoders E and the decoders D by the BPTT, for example. This machine learning is known in the art, and thus the details thereof will be omitted here.

In the description above, the learning machine 105 uses the model using the long short-term memory cell, although the learning machine 105 may use other cells, such as GRU cell. For example, the feature information may be obtained by using a search algorithm such as BeamSearch. For example, the long short-term memory cell may employ any known configuration, and may or may not include a peep-hole mechanism and an attention vector. Further, a forget gate is not necessarily required, although a model with the forget gate appears to obtain more accurate results. Although omitted in the above description, the learning machine 105 may output a score indicating probability together with a word. Further, the obtaining unit 107 may obtain only a word having a score equal to or more than a threshold value as feature information.

In this embodiment, a product title to be entered in the learning machine 105 is used as a first index, and thus the obtaining unit 107 inputs a first index of a target product page in the learning machine 105, and obtains character information as feature information from the learning machine 105.

Further, for example, in this embodiment, feature information is obtained when a product page is newly added, and thus the obtaining unit 107 inputs item information of the new product page in the learning machine 105, and obtains feature information of the new product page from the learning machine 105.

The feature information may be regularly updated so as to correspond to a trend change, rather than being obtained when a product page is newly added. For example, queries entered by users may vary depending on the times, and when the feature information associated with the product page is out of date, it may not match the latest trend. As such, even if feature information is already associated with a product page, the obtaining unit 107 may regularly update such feature information.

For example, the product database DB may store a date and time when the feature information is associated, and, if a product page has passed a certain period of time since the date and time, the obtaining unit 107 may obtain feature information of the product page again from the latest learning machine 105 to update the feature information. For example, whenever a certain period of time elapses, the obtaining unit 107 may obtain feature information of all the product pages again from the latest learning machine 105 so as to update the feature information, rather than storing a date and time when the feature information is associated. For example, the feature information may be updated irregularly. Upon receiving an instruction from a system administrator, for example, the obtaining unit 107 may obtain feature information again from the latest learning machine 105 so as to update the feature information. For example, there may be a case where a person in charge in a shop may correct a product title in a product page. As such, when the product title is corrected, the obtaining unit 107 may obtain feature information again from the latest learning machine 105 so as to update the feature information.

### [3-8. Registering unit]

The registering unit 108 is implemented mainly by the CPU 11. The registering unit 108 registers feature information in the product database DB in association with a target product page. The registering unit 108 stores the feature information obtained by the obtaining unit 107 in a record of the target product page in the product database DB.

In this embodiment, the feature information is used as an index, and thus the registering unit 108 registers character information obtained from the learning machine 105 in the database as an index (e.g., second index) of the target product page. For example, in this embodiment, a case will be described in which a new product page is an example of the target product page, and thus the registering unit 108 registers feature information in the database in association with a new product page.

### [4. Functions implemented in search system]

Next, the processing executed in the search system 1 will be described. Here, as an example of the processing, training data generating processing for generating training data DT based on actions of users, and index registering processing for registering indexes of product pages using the learning machine 105 will be described.

### [4-1. Training data generating processing]

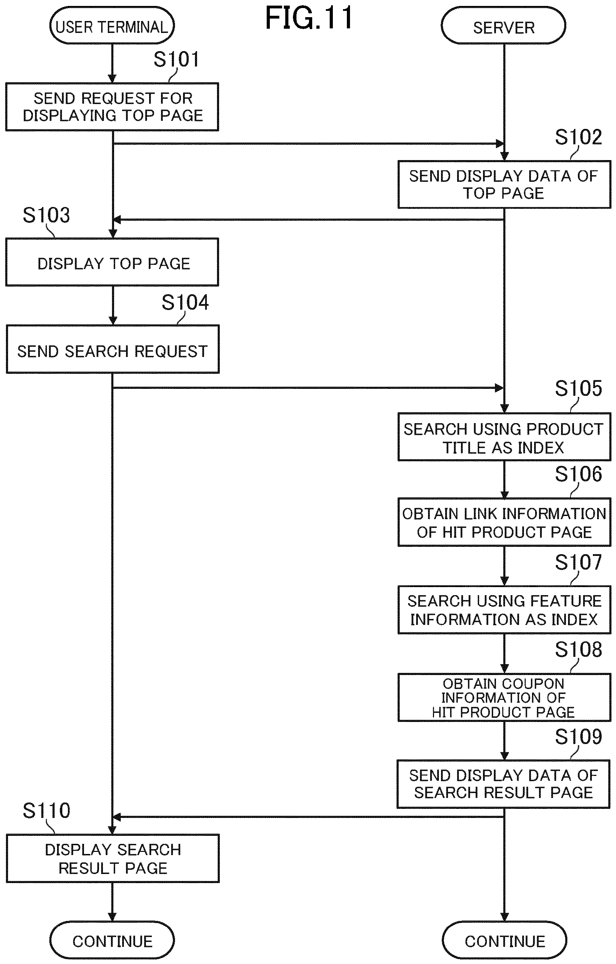

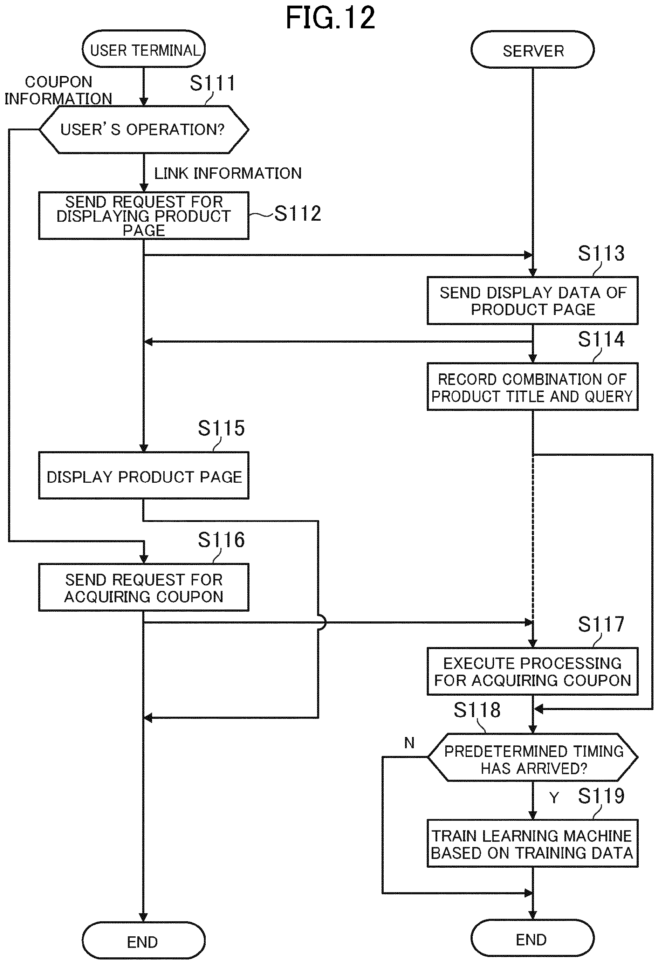

FIGs. 11 and 12 are flow charts showing an example of training data generating processing. The processing shown in FIGs. 11 and 12 is executed when the control unit 11 operates in accordance with the program stored in the storage unit 12 and the user terminal 20 operates in accordance with the program stored in the user terminal 20 therein. The processing described below is an example of the processing executed by the functional block shown in FIG. 6.

As shown in FIG. 11, the user terminal 20 sends a request for displaying the top page P1 to the server 10 (S101) . For example, the request for displaying the top page P1 is sent when the URL of the top page P1 is selected or a predetermined application is activated.

When the server 10 receives the display request, the CPU 11 sends display data of the top page P1 to the user terminal 20 (S102). The display data of the top page P1 is stored in the memory 12 in advance. The display data may be HTML data, or an image or a text to be inserted into a frame. The same is applied to the description of "display data" in the following.

Upon receiving the display data, the user terminal 20 displays the top page P1 (S103) . Subsequently, the user can enter any desired search condition in the user terminal 20. Here, a case will be described in which the user enters character information used as a query in the input form F10.

The user terminal 20 sends a search request using the character information entered in the input form F10 as a query (S104). In S104, the user terminal 20 reflects the character information, which is entered by the user, in the input form F10, and sends the search request when a predetermined operation instructing execution of the search is performed. The search request includes the character information entered in the input form F10 by the user.

When the server 10 receives the search request, the CPU 11 searches the product database DB using the character information entered by the user as a query and the product title as an index (S105). In S105, the CPU 11 executes the ambiguous search as described above, and obtains a search result.

The CPU 11 obtains link information of the product page that is hit in the search in S105 based on the product database DB (S106) . In S106, the CPU 11 obtains the link information to be inserted in the list L21 based on information of the product page that is hit in the search result, such as a shop name, a product title, a price, a product image, and a URL.

The CPU 11 searches the product database DB using the character information entered by the user as a query and the feature information as an index (S107). The search method in S107 may be the same as that in S105, although the search method in S107 is different from that in S105 in that the feature information is used as an index.

The CPU 11 obtains the coupon information 122 of the product that is hit in the search in S107 based on the product database DB (S108). In S108, the CPU 11 obtains the coupon information 122 based on a shop ID, a product ID, a shop name, a product title, a product image, and a coupon of the product that is hit in the search result.

The CPU 11 sends the display data of the search result page P2 to the user terminal 20 based on the link information obtained in S106 and the coupon information 122 obtained in S108 (S109).

Upon receiving the display data, the user terminal 20 displays the search result page P2 (S110) . When the search result page P2 is displayed, the user can select the link information in the list L21, or select the coupon information 122.

Proceeding to FIG. 12, the user terminal 20 specifies the operation of the user (S111). If the user selects the link information in the list L21 (Sill; link information), the CPU 11 sends to the server 10 a request for displaying a product page indicated by the link information selected by the user (S112). The display request includes identification information (e.g., URL) of the product page to be displayed.

When the server 10 receives the display request, the CPU 11 sends the display data of the product page P3 to the user terminal 20 based on the product database DB (S113). In S113, the CPU 11 sends, for example, HTML data of the product page P3 indicated by the identification information included in the display request.

The CPU 11 records a combination of the product title of the product page selected by the user and the query entered by the user in the training data DT (S114) . In S114, the CPU 11 refers to the product database DB to specify the product title of the product page selected by the user. The CPU 11 then records the combination of the specified product title and the character information of the query received in S105 in the training data DT.

Upon receiving the display data, the user terminal 20 displays the product page P3 (S115), then the processing terminates. If the user performs an operation to return to the top page P1, the processing returns to S101, and if the user performs an operation to return to the search result page P2, the processing returns to Sill.

In Sill, if the user selects the coupon information 122 (Sill; coupon information), the CPU 11 sends to the server 10 a request for acquiring the coupon information 122 selected by the user (S116). The acquiring request includes identification information (e.g. product ID) of a coupon to be acquired.

When the server 10 receives the acquiring request, the CPU 11 executes the processing for enabling the user to acquire a coupon (S117). In S117, the identification information of the coupon information 122 selected by the user is associated with the user ID, and the user can thereby acquire the coupon.

The CPU 11 determines whether the predetermined timing to train the learning machine 105 has arrived (S118) . In S118, for example, the CPU 11 determines whether a predetermined request is received from the administrator of the search system 1, or a predetermined date and time has arrived.

If it is determined that the predetermined timing has arrived (S118; Y), the CPU 11 trains the learning machine 105 based on the training data DT (S119) . In S119, the CPU 11 uses the BPTT, for example, to change the internal parameters of the encoders E and the decoders D of the learning machine 105. On the other hand, if it is not determined that predetermined timing has arrived (S118; N), the processing terminates.

### [4-2. Index registration processing]

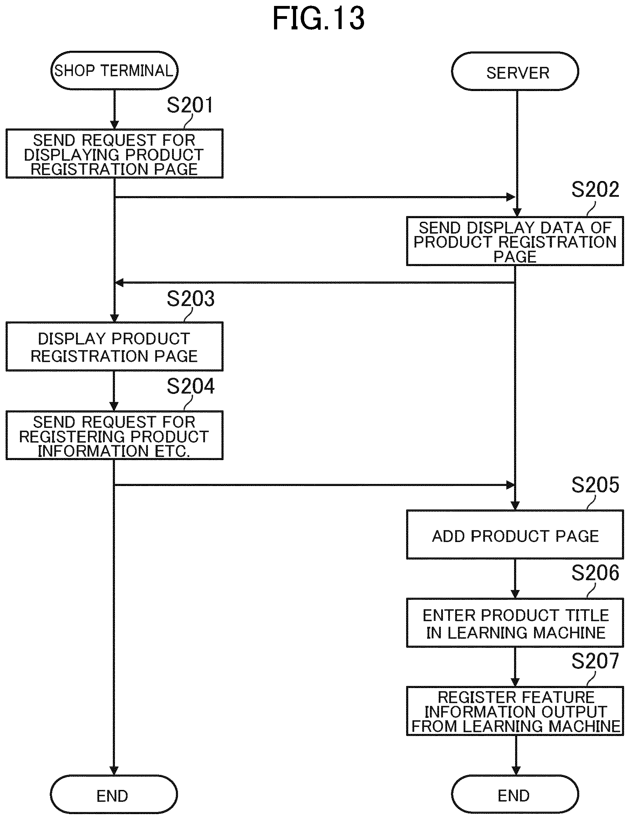

FIG. 13 is a flow chart showing an example of index registration processing. The processing shown in FIG. 13 is executed when the control unit 11 operates in accordance with the program stored in the storage unit 12 and the shop terminal 30 operates in accordance with the program stored in the shop terminal 30 therein. The processing described below is an example of the processing executed by the functional block shown in FIG. 6.

As shown in FIG. 13, the shop terminal 30 sends a request for displaying the product registration page P4 to the server 10 (S201). For example, the display request of the product registration page P4 is sent when a predetermined log-in process is executed and then the person in charge in the shop selects a link to the product registration page P4.

When the server 10 receives the display request, the CPU 11 sends the display data of the product registration page P4 to the user terminal 20 (S202). For example, the HTML data of the product registration page P4 is stored in the memory 12 in advance.

Upon receiving the display data, the shop terminal 30 displays the product registration page P4 (S203). When the product registration page P4 is displayed, the user can enter information about the product and the URL in input forms F40 to F44, for example, and select a button B45.

The shop terminal 30 sends a request for registering the information, such as the product information, entered in the input forms F40 to F44 (S204). The registering request includes the information entered in the product registration page P4.

When the server 10 receives the registering request, the CPU 11 adds the product page to the product database DB based on the received information (S205). In S205, the CPU 11 generates a new record in the product database DB, and stores the product information and the URL in the record.

The CPU 11 inputs, in the learning machine 105, the product title entered in the input form F40 (S206) . In S206, the CPU 11 divides the product title into a plurality of words, and sequentially inputs the words in the learning machine. This processing is as described with reference to FIG. 10.

The CPU 11 obtains the feature information output from the learning machine 105 and registers the obtained feature information in the product database DB (S207), and the processing terminates. In S207, the CPU 11 registers the plurality of words output from the learning machine 105 in the product database DB as the feature information. Subsequently, the registered feature information is used as an index at the time of search.

According to the search system 1 described above, when the product title of the product page is entered in the learning machine 105, the character information previously used as a query is output and is registered in association with the product page. As such, even if a product page has not been selected yet, the learning machine 105 can assist in searching the product page, and search accuracy can thereby be improved. For example, the learning machine 105 that returns a product page to a query, which is described as the related art, needs to execute the processing of the learning machine 105 whenever a search is performed, and thus fast response by the server 10 may be difficult. In this regard, the search system 1 registers the feature information in advance, and thus the search system 1 does not need to execute the processing of the learning machine 105 whenever a search is performed. This can speed up the process of returning the search result.

The character information output from the learning machine 105 is used as an index, and thus the accuracy of search can be improved. For example, in a case where the shop freely inputs a product title as in the embodiment, there may be a possibility that an appropriate index is not registered in a product page. In this regard, the character information (query list) actually entered by the user in the past is registered in the search system 1 as an index, and thus an appropriate index can be registered.

Further, the product title used as the first index is entered in the learning machine 105, and the character information obtained from the learning machine 105 is used as the second index. This increases variety in indexes of the product page, and effectively improves accuracy of search.

The combination of the product title of the product page selected by the user and the character information used as a query is recorded in the training data DT, and the learning machine 105 is trained based on the training data DT at the predetermined timing. This can reduce the processing load of the server 10.

The learning machine 105 based on a recurrent neural network model, a long short-term memory model, or a sequence conversion model is used, and thus, even if a product title of undefined length is entered, feature information of undefined length can be output. Further, the feature information according to a word order can be output.

When a new product page is added, such a product page is entered in the learning machine 105. With this configuration, a new product page can be registered in association with character information output from the learning machine 105.

The first search result is provided based on the product title, which is the first index of the product page, and the second search result is provided based on the feature information, which is the second index. This can provide the user with a variety of information.

The list L21 for displaying the product page is provided based on the product title, which is the first index of the product page, and the coupon information 122 is provided based on the feature information, which is the second index. This can provide the user with a variety of information.

### [5. Variations]

The present invention is not to be limited to the above described embodiment. The present invention can be changed as appropriate without departing from the spirit of the invention.

For example, in the embodiment, the learning machine 105 is trained at the predetermined timing, although the training unit 104 may train the learning machine 105 to learn the relationship described in the embodiment whenever the user selects a product page. In this case, the training unit 104 may train the learning machine 105 whenever the user selects a product page, rather than training the learning machine 105 to simultaneously learn accumulated combinations of product titles of product pages selected by the user and character information used as queries.

According to the variation described above, the learning machine 105 is trained whenever the user selects a product page, and the accuracy of the learning machine 105 can be thereby improved.

For example, in the embodiment, a data item is a product page relating to a product, although a data item may be a page relating to service. In this case, the search unit 101 may provide the user with a search result for displaying a page relating to service, or provide the user with a search result for giving a coupon of the service. The service may be any service. For example, when displaying pages on service, such as accommodation service, insurance service, and financial service, the processing as described in the embodiment may be executed.

In the embodiment, the feature information registered by the registering unit 108 is used as an index, although the feature information may not be particularly used as an index. For example, the feature information may be used for associating similar product pages with each other. In this case, for example, product pages having the similar character information indicated by the feature information may be associated with each other, and when displaying the product page selected by the user, a link to a similar product page may be displayed as a recommendation. For example, the probability that is output from the learning machine 105 may be used as the feature information, and product pages having high probabilities may be associated with each other.

For example, the functions of the search system 1 may be omitted except the search unit 101, the providing unit 102, the training unit 104, the obtaining unit 107, and the registering unit 108. For example, the data storage unit 100 may not need to be included in the search system 1, but may be implemented by a database server. For example, the case has been described in which the functions are implemented in the server 10, although the functions may be shared between the user terminal 20 and the shop terminal 30.

## Claims

1. A search system comprising:
searching means for searching a database, in which a plurality of data items are stored, using character information entered by a user as a query;
providing means for providing the user with a data item selected by the user from a search result obtained by the searching means;
training means for training a learning machine to learn a relationship between item information of the data item selected by the user and the character information used as the query;
obtaining means for entering item information of a target data item into the learning machine and obtaining feature information of the target data item from the learning machine; and
registering means for registering the feature information in the database in association with the target data item.

2. The search system according to claim 1, wherein
the obtaining means obtains the character information as the feature information, and
the registering means registers the character information, which is obtained from the learning machine, in the database as an index of the target data item.

3. The search system according to claim 2, wherein
the item information is the character information defined as a first index,
the training means trains the learning machine to learn a relationship between the first index of the data item selected by the user and the character information used as the query,
the obtaining means enters the first index of the target data item into the learning machine, and obtains the character information as the feature information from the learning machine, and
the registering means registers the character information obtained from the learning machine in the database as a second index of the target data item.

4. The search system according to any one of claims 1 to 3, further comprising recording means for recording a combination of the item information of the data item selected by the user and the character information used as the query, wherein
the training means trains the learning machine to learn the relationship at predetermined timing based on the combination recorded by the recording means.

5. The search system according to any one of claims 1 to 3, wherein
the training means trains the learning machine to learn the relationship whenever the user selects a data item.

6. The search system according to any one of claims 1 to 5, wherein
the training means generates the learning machine based on a recurrent neural network model, a long short-term memory model, or a sequence conversion model.

7. The search system according to any one of claims 1 to 6, further comprising adding means for adding a new data item to the database, wherein
the obtaining means enters item information of the new data item into the learning machine, and obtains feature information of the new data item from the learning machine, and
the registering means registers the feature information in the database in association with the new data item.

8. The search system according to claim 2 or 3, wherein
the database stores, for each data item, a first index and a second index that is registered by the registering means, and
the searching means provides the user with a first search result based on the first index, and provides the user with a second search result based on the second index.

9. The search system according to claim 8, wherein
the data item relates to a product or service, and
the searching means provides the user with the first search result for displaying a page of the product or the service based on the first index, and provides the user with the second search result for providing a coupon of the product or the service based on the second index.

10. A search method comprising the steps of:
searching a database, in which a plurality of data items are stored, using character information entered by a user as a query;
providing the user with a data item selected by the user from a search result obtained in the searching step;
training a learning machine to learn a relationship between item information of the data item selected by the user and the character information used as the query;
entering item information of a target data item into the learning machine and obtaining feature information of the target data item from the learning machine; and
registering the feature information in the database in association with the target data item.

11. A program for causing a computer to function as:
searching means for searching a database, in which a plurality of data items are stored, using character information entered by a user as a query;
providing means for providing the user with a data item selected by the user from a search result obtained by the searching means;
training means for training a learning machine to learn a relationship between item information of the data item selected by the user and the character information used as the query;
obtaining means for entering item information of a target data item into the learning machine and obtaining feature information of the target data item from the learning machine; and
registering means for registering the feature information in the database in association with the target data item.

## Amended claims

### Amended claims under Art. 19.1 PCT

1. A search system comprising:
searching means for searching a database, in which a plurality of data items are stored, using character information entered by a user as a query;
providing means for providing the user with a data item selected by the user from a search result obtained by the searching means;
training means for training a learning machine to learn a relationship between character information defined as a first index of the data item selected by the user and the character information used as the query;
obtaining means for entering a first index of a target data item into the learning machine and obtaining character information of the target data item from the learning machine; and
registering means for registering the character information obtained from the learning machine in the database as a second index of the target data item.

2. (deleted)

3. (deleted)

4. The search system according to claim 1, further comprising recording means for recording a combination of the first index of the data item selected by the user and the character information used as the query, wherein
the training means trains the learning machine to learn the relationship at predetermined timing based on the combination recorded by the recording means.

5. The search system according to claim 1 or 4, wherein the training means trains the learning machine to learn the relationship whenever the user selects a data item.

6. The search system according to claim 1 or 4 or 5, wherein the training means generates the learning machine based on a recurrent neural network model, a long short-term memory model, or a sequence conversion model.

7. The search system according to claim 1 or 4 or 5 or 6, further comprising adding means for adding a new data item to the database, wherein
the obtaining means enters a first index of the new data item into the learning machine, and obtains character information of the new data item from the learning machine, and
the registering means registers the character information obtained from the learning machine in the database in association with the new data item.

8. The search system according to claim 1 or 4 or 5 or 6 or 7, wherein
the database stores, for each data item, a first index and a second index that is registered by the registering means, and
the searching means provides the user with a first search result based on the first index, and provides the user with a second search result based on the second index.

9. The search system according to claim 8, wherein
the data item relates to a product or service, and
the searching means provides the user with the first search result for displaying a page of the product or the service based on the first index, and provides the user with the second search result for providing a coupon of the product or the service based on the second index.

10. A search method comprising the steps of:
searching a database, in which a plurality of data items are stored, using character information entered by a user as a query;
providing the user with a data item selected by the user from a search result obtained in the searching step;
training a learning machine to learn a relationship between character information defined as a first index of the data item selected by the user and the character information used as the query;
entering a first index of a target data item into the learning machine and obtaining character information of the target data item from the learning machine; and
registering the character information obtained from the learning machine as a second index of the target data item.

11. A program for causing a computer to function as:
searching means for searching a database, in which a plurality of data items are stored, using character information entered by a user as a query;
providing means for providing the user with a data item selected by the user from a search result obtained by the searching means;
training means for training a learning machine to learn a relationship between character information defined as a first index of the data item selected by the user and the character information used as the query;
obtaining means for entering a first index of a target data item into the learning machine and obtaining character information of the target data item from the learning machine; and
registering means for registering the character information obtained from the learning machine in the database as a second index of the target data item.

Statement under Art. 19.1 PCT
We incorporated features of previous claim 3 that is novel and involves an inventive step in ISR to previous claim 1.
 Claims 2 and 3 are deleted.
 Claims 4-9 depends on amended claim 1.
 We incorporated features of previous claim 3 that is novel and involves an inventive step in ISR to previous claim 10.
 We incorporated features of previous claim 3 that is novel and involves an inventive step in ISR to previous claim 11.
